# EUROPEAN PATENT APPLICATION

(11) **EP 0 945 720 A1**
(43) Date of publication of application: **29.09.1999**
(21) Application number: 99420065.7
(22) Date of filing: 10.03.1999
(51) Int. Cl.: G01N 21/33, G03D 13/00

(54) **Method and device for the processing of silver halide photographic materials**

(30) Priority: 24.03.1998 FR 9803864
(71) Applicant: EASTMAN KODAK COMPANY, Rochester, New York 14650-2201 (US)
(72) Inventor: Goumont, Claude Germain, c/o Kodak Industrie, 71102 Chalon sur Saone Cedex (FR); Roussilhe, Jacques, c/o Kodak Industrie, 71102 Chalon sur Saone Cedex (FR)
(74) Representative: Parent, Yves

(57) **Abstract**

This invention relates to a method and a device for the processing of silver halide photographic materials. The method of the invention comprises the step of measuring the concentration of a developing agent in a photographic developing solution to monitor the activity of the bath and/or the need to replenish it.

## Description

### FIELD OF THE INVENTION

This invention relates to the treatment of silver halide photographic materials for the purpose of converting the latent images obtained by light exposure into developed, fixed and stabilized visible images.

### PRIOR ART

The processing of photographic materials comprises a development step followed by a fixing step in the case of black-and-white development. The development step is carried out by immersion of the exposed photographic material in a developing bath containing a silver halide developing agent, the function of which is to reduce the exposed silver halides to metallic silver. After fixing, the photographic material is washed and dried.

During use the developing bath becomes gradually depleted in developing agent through the silver halide development reaction, and also by additional oxidation of the developing agent. This consumption of the developing agent, and the ensuing decrease in the concentration of the developing agent, causes the activity of the developing bath to decrease, thereby adversely affecting the sensitometric characteristics of the processed photographic materials. A way to make up for this loss of activity is to add to the 'seasoned' developing bath a certain amount of new developing solution, known as replenishing solution. However, the optimum timing of replenishment and the optimum quantities of replenishing solution to be added are difficult to determine. This is because a photofinishing laboratory treats a wide range of films and so the quantities of replenishing solution are in practice set at values that are significantly higher than is necessary. Clearly, it is desirable to add the minimum quantity of replenishing solution that is compatible with the maintenance of the specified sensitometric characteristics. Another positive outcome of minimizing replenishment is a reduction in the volume of effluent. The problem therefore is to be able to know when to replenish the developing solution, i.e., to determine when the activity of the developing bath is too low to ensure that the sensitometric characteristics will be maintained at the values that are specified for any particular photographic process. An essential parameter of the developing bath activity is the concentration of developing agent, which therefore has to be measured.

Various methods are known for measuring the concentration of developing agents. Many of these methods require prior extraction of the developing agent, and so are not suitable for preferably automated in-process monitoring of the concentration of a developing agent throughout the photographic processing. This extraction has been deemed necessary owing to the complex composition of the seasoned developing bath, and the presence in it of a large number of substances liable to react with analytical reagents or respond to analytical tools. The methods for determining the concentration of the developing agent are chemical, e.g., colorimetry, electrochemical, e.g., voltametry, or physical, e.g., chromatography. These methods are described in 'Chimie et Physique Photographiques' by P. Glafkidès, 5^{th} edition, pages 171-178 and 943-944. For on-line determinations, measuring the optical density of the developing bath has also been advocated. A new developing solution is limpid and pale yellow, whereas after a certain time in use it becomes turbid and dark in color. The increase in optical density can therefore be correlated with the seasoning of the developer, affording a way of determining when the developer has to be replenished. Such a method is described, for example, in U.S. Patent n° 5,489,961. However, it is not a direct accurate measurement of the concentration of the developing agent, which is the main parameter that the activity of the developing bath depends on. Clearly then, the measurement of the concentration of the developing agent has to meet two conditions: the measurement must be accurate, and the measurement has to be performed on-line in a simple way, so that the result of this measurement can be exploited, especially to order replenishing of the developer if necessary.

The object of this invention is to provide a method that solves this problem.

### SUMMARY OF THE INVENTION

There is provided a method comprising developing a previously exposed silver halide photographic material, using a developing solution containing a first silver halide developing agent, wherein the developing activity of which is monitored by measuring the concentration of said developing agent by ultraviolet spectrophotometry.

There is also provided a device for monitoring the developing activity of one or more photographic processing lines, said device comprising a system for measuring the concentration of a developing agent by spectrophotometry, and means to preselect the range of wavelength of the spectrophotometric measurement according to the developing agent the concentration of which is to be measured.

The method of the invention is based on the fact that certain constituents of the developing baths, especially the developing agents, absorb electromagnetic radiation in certain characteristic wavelength ranges of the electromagnetic spectrum. Thus, it is possible, for such developing agents, to find at least one wavelength range in which interfering absorption by other constituents of the developing bath is minimal. In this range a spectrophotometric measurement can be made which, after calibration, affords a direct read-off of the concentration of the developing agent that absorbs radiation in that particular range. Depending on the concentration to be measured, and the presence of substances liable to hinder measurement, cells are used that optimize the optical path length of the light absorbed. The power of the radiation source, and the sensitivity of the detector, can also be adjusted.

### BRIEF DESCRIPTION OF THE DRAWINGS

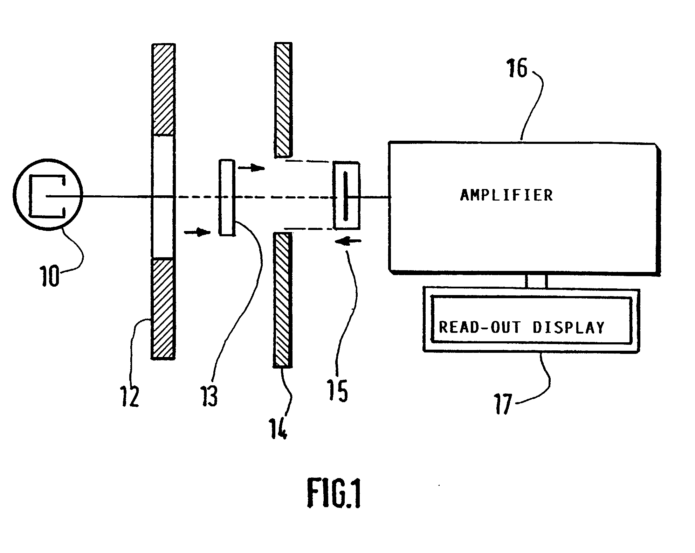

Figure 1 is a diagram showing an example of a set-up for the implementation of the method according to the invention. This set-up comprises a UV lamp **10**, a filter **12**, a cell **13** with a sample vessel, a collimator **14**, a UV radiation detector **15**, an amplifier **16** and a read-out display **17**.

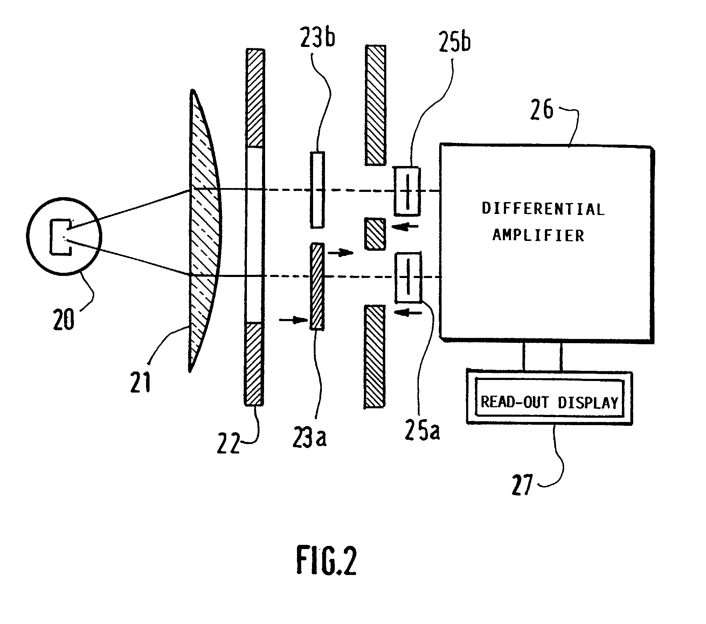

Figure 2 is a diagram showing another example of a set-up comprising a UV lamp **20**, a quartz lens **21**, an interferential filter **22**, a cell **23a** with a vessel containing the developing solution to be tested, a control cell **23b**, UV radiation detectors **25a** and **25b**, a differential amplifier **26**, and a read-out display **27**.

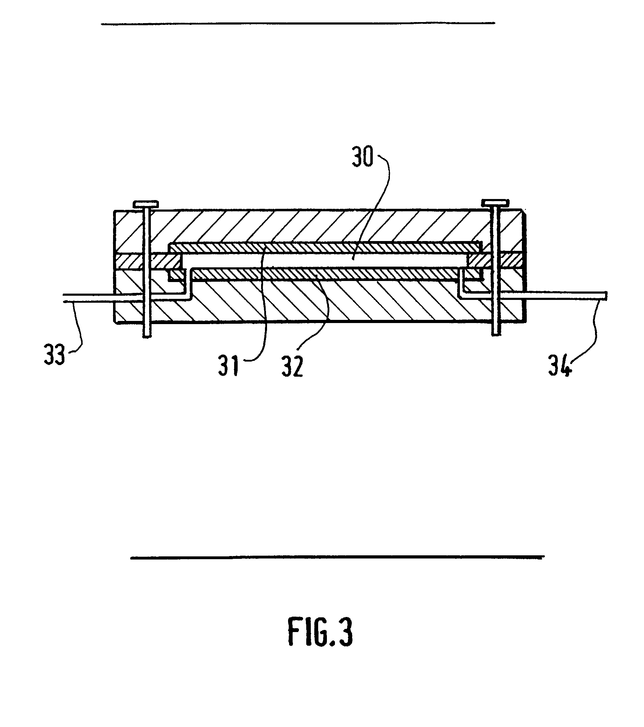

Figure 3 is a diagram showing a cell such as cell **13** in Figure 1. This cell comprises a vessel **30** delimited by two quartz plates **31** and **32**. The thickness of the vessel, and thereby the optical path length of the radiation, can be adjusted. The ducts **33** and **34** allow the developing solution to be fed into the vessel in-process from the photographic processing machine.

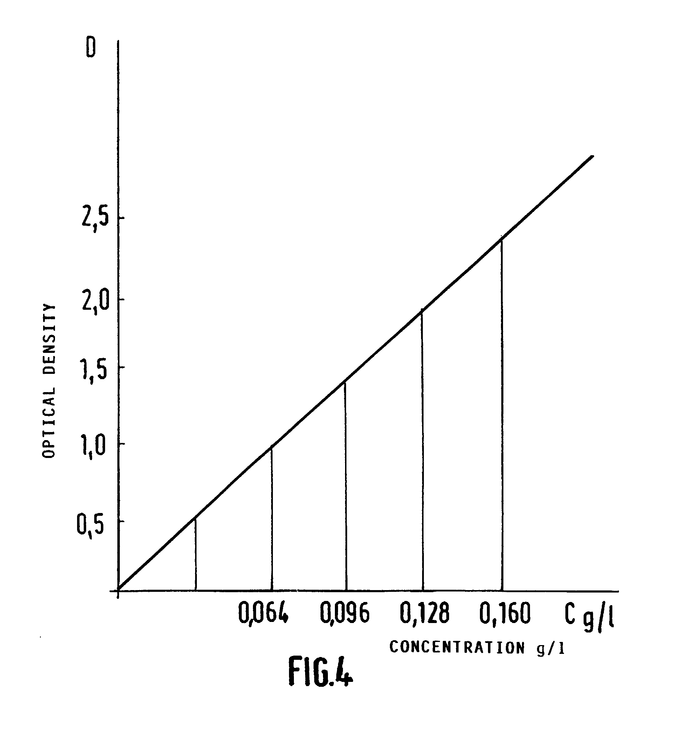

Figure 4 is a graph illustrating the variation of the optical density as a function of the concentration of the developing agent.

Set-ups such as those depicted in Figures 1-3 afford in-process measurements, without prior dilution of the developing solution if the thickness of the cell vessel is chosen appropriately.

### DETAILED DESCRIPTION OF THE INVENTION

Any suitable spectrophotometric UV source can be used that delivers UV radiation in the range in which the absorption of the substance to be assayed is maximum and specific. For developing agents of the ascorbic acid type, at a wavelength range from 250 nm to 280 nm, and preferably from 260 nm to 270 nm, a specific linear optical density response can be obtained over a useful concentration range of the developing agent in the developing bath.

In the same way the concentration of another developing agent can be determined using a UV spectrophotometric measurement at another wavelength, characteristic of that developing agent.

In general, the implementation of the method of the invention comprises a method for sampling the developing solution in the developing tank and bringing the sample, for example with a pump, to the measurement cell ofthe spectrometer. This assembly (sampling, ducting, measurement) can be integrated in an automated developer replenishing device. All that is necessary is that at predetermined values of the spectrophotometric measurements a signal is generated that actuates a replenishing or replacement solution feed system, or which warns the photographic processing maintenance personnel to replenish the developing solution. The method of the invention can also allow continuous monitoring of the concentration of the developing agent, and so of the developing bath activity, or monitoring of the deviation of that concentration from a preset value.

### EXAMPLE 1

A sample of developing solution was taken with the following composition:

| Ascorbic acid: quantity as given in Table I. | |
|---|---|
| Dimezone S (HMMP)⁽¹⁾ | 2.5 g/l |
| Benzotriazole | 0.2 g/l |
| KBr | 4.0 g/l |
| K₂SO₃ | 50.0 g/l |
| K₂CO₃ | 100.0 g/l |
| NaDTPA⁽²⁾ 40% solution | 4.3 g/l |
| pH = 10.2 | |

| | |
|---|---|
| ⁽¹⁾ 4-hydroxymethyl-4-methyl-1-phenyl-3-pyrazolidone | |
| ⁽²⁾ diethylenetriaminopentaacetic acid sodium salt | |

A sample of this developing solution (see Table I) was diluted in 100 ml of a buffer solution containing 1% sodium sulfite (pH 6.86). This sample of diluted developing solution was placed in the cell vessel of a spectrophotometer (optical path length 2 mm). The measurements of optical density at 264 nm against ascorbic acid concentration are given in Table I below.

**TABLE I**

| Developing solution sample ml | Concentration of ascorbic acid g/l | Optical density |
|---|---|---|
| 0.5 | 0.160 | 2.32 |
| 0.4 | 0.128 | 1.91 |
| 0.3 | 0.096 | 1.41 |
| 0.2 | 0.064 | 0.92 |

These results show that even in the presence of the other constituents of the seasoned developing solution, the spectrophotometric measurement gives a linear response to the ascorbic acid concentration. Figure 4 shows these same results in graph form giving the variation of the optical density D versus the concentration C of ascorbic acid.

### EXAMPLE 2

The operating procedure of Example 1 was used, except that the developing solution contained 7.2 g/l of ascorbic acid, and in place of HMMP, 0.625 g/l of Elon (p-methylaminophenol sulfate). 0.5, 0.4, and 0.3 ml (see Table II below) of this developing solution was diluted in 50 ml of a buffer solution of 0.05 M sodium phosphate containing 1% sodium sulfite (pH 6.86). The spectrophotometric measurements at 264 nm still gave a linear response to the concentration of ascorbic acid, despite the changed chemical environment.

**TABLE II**

| Developing solution sample ml | Concentration of ascorbic acid g/l | Optical density |
|---|---|---|
| 0.5 | 7.12 | 1.20 |
| 0.4 | 6.0 | 0.97 |
| 0.3 | 4.7 | 0.76 |

### EXAMPLE 3

The operating procedure of Example 2 was used, except that the Elon concentration was varied. The spectrophotometry results are given in Table III below:

**TABLE III**

| Concentration of ascorbic acid g/l | Concentration of Elon g/l | Optical density |
|---|---|---|
| 7.2 | 0.625 | 1.17 |
| 7.2 | 0.520 | 1.15 |
| 7.2 | 0.420 | 1.12 |

Varying the concentration of Elon had practically no impact on the spectrophotometric response.

The invention has been described in detail with particular reference to certain preferred embodiments thereof, but it will be understood that variations and modifications can be effected within the spirit and scope of the invention.

## Claims

1. A method for the development of an exposed silver halide photographic material, said method using a developing solution containing at least one silver halide developing agent, characterized in that the developing activity of said developing solution is monitored by measuring the concentration of said developing agent by ultraviolet spectrophotometry.

2. The method of Claim 1, characterized in that the range of wavelength of the spectrophotometric measurement is predetermined according to the nature of the developing agent the concentration of which is to be measured.

3. The method of Claims 1 or 2, characterized in that the spectrophotometric measurement can be performed either in-process, or discontinuously.

4. The method of any one of Claim 1 to 3, characterized in that said spectrophotometric measurement produces a signal that orders an input of replenishing developing solution.

5. The method of any one of Claims 1 to 4, characterized in that said developing agent of which the concentration is to be measured is of the ascorbic acid type.

6. The method of Claim 5, characterized in that said spectrophotometric measurement is carried out in the wavelength range of from 200 to 400 nm.

7. The method of Claims 5 or 6, characterized in that the developing solution contains another developing agent that does not interfere with the measurement of the concentration of said developing agent of the ascorbic acid type.

8. A device for monitoring the developing activity of one or more photographic processing lines, said device comprising a system for measuring the concentration of a developing agent by spectrophotometry in a given wavelength range.

9. The device of Claim 8, which further comprises means to preselect the range of wavelength of the spectrophotometric measurement depending on the developing agent the concentration of which is to be measured.

10. The device of Claim 8, wherein the wavelenght range is in the range of from 200 to 400 nm.
